Europäisches Patentamt

European Patent Office

Office européen des brevets

(11) Veröffentlichungsnummer: **0 420 078 A1**

## (12) EUROPÄISCHE PATENTANMELDUNG

(21) Anmeldenummer: 90118231.1

(22) Anmeldetag: 22.09.90

(51) Int. Cl.⁵: F23Q 7/00

(30) Priorität: 29.09.89 DE 3932602

(43) Veröffentlichungstag der Anmeldung:
03.04.91 Patentblatt 91/14

(84) Benannte Vertragsstaaten:
DE ES FR GB IT

(71) Anmelder: SCHOELLER & CO.
Elektrotechnische Fabrik GmbH & Co.
Mörfelder Landstrasse 115-119 Postfach 70
09 54
W-6000 Frankfurt am Main(DE)

(72) Erfinder: von Gaisberg, Alexander
Goethestrasse 26
W-7141 Beilstein(DE)
Erfinder: Merkel, Alfred
Friedhofstrasse 17a
W-6078 Neu-Isenburg(DE)

(74) Vertreter: Rupprecht, Klaus, Dipl.-Ing. et al
c/o Asea Brown Boveri Aktiengesellschaft
Zentralbereich Patente Postfach 100351
W-6800 Mannheim 1(DE)

(54) Elektrischer Zigarrenanzünder mit Überlastschutzvorrichtung.

(57) 2. Um bei einem elektrischen Zigarrenanzünder eine vollautomatisch arbeitende thermische Überlastschutzvorrichtung bereitzustellen, welche ein vielfaches zerstörungsfreies Ansprechen gewährleistet, wird erfindungsgemäß vorgeschlagen, als Schutzelement einen temperaturabhängigen PTC-Widerstand mit dem über Widerstandsheizung aufheizbaren Glühelement des Zündsteckers elektrisch in Reihe zu schalten sowie an das Steckdosengehäuse thermisch anzukoppeln. Neben der Verwendung temperaturabhängiger PTC-Widerstände wird auch die Verwendung spannungsabhängiger sowie stromstärkeabhängiger Widerstände als Schutzelement vorgeschlagen.

Fig. 1

EP 0 420 078 A1

# ELEKTRISCHER ZIGARRENANZÜNDER MIT ÜBERLASTSCHUTZVORRICHTUNG

Die Erfindung betrifft einen elektrischen Zigarrenanzünder, insbesondere für Kraftfahrzeuge, mit einem an einen Minuskontaktteil angeschlossenen Steckdosengehäuse, welches einen an einem Pluskontaktteil angeschlossenen Bimetallfederkontakt aufweist, und einem mit einem elektrisch aufheizbaren Glühelement versehenen Zündstecker, wobei während des Aufheizvorgangs einerseits ein Zündsteckerwandungsteil mit dem Steckdosengehäuse und andererseits das Glühelement mit dem Bimetallfederkontakt in elektrisch leitender Verbindung steht, so daß ein mit Hilfe des Pluskontaktteils, des Bimetallfederkontakts, des Zündsteckerwandungsteils, des Steckdosengehäuses und des Minuskontaktteils gebildeter Heizstromkreis geschlossen ist, sowie mit einem thermischen Überlastschutz.

Aus der fachzeitschriftlichen Vorveröffentlichung E. Andrich. PTC-Thermistoren als selbstregelnde Heizelemente, Philips Technische Rundschau, 30. Jahrgang, 1969/70, Nr. 6/7, Seiten 192-200, ist es an sich bekannt, PTC-Thermistoren zu temperaturabhängigen Schaltvorgängen zu benutzen. Erhöht sich nämlich die Temperatur eines Thermistors bis in die Gegend der Curie-Temperatur, z.B. durch einen Anstieg der Umgebungstemperatur oder durch eine Zunahme der in ihm umgesetzten elektrischen Leistung, so drosselt er selbsttätig den durchgehenden Strom. Dadurch kann die Leistungsaufnahme eines mit einem Thermistor in Reihe geschalteten elektrischen Verbrauchers verringert oder ein Relais geschaltet werden.

Weiter ist aus der DE-OS 29 35 424 bekannt, ein im Zündbereich einer Glühstiftkerze für Brennkraftmaschinen vorgesehenes Widerstandsheizelement aus einem Material mit PTC-Charakteristik zu fertigen. Da infolge der mit steigender Temperatur automatisch einsetzenden Widerstandserhöhung eine selbsttätige Temperaturbegrenzung des Heizelements bewirkt wird, ist ein Durchbrennen des Heizelements ausgeschlossen.

Um durch Überhitzung auftretende Schäden in der Nähe eines elektrischen Zigarrenanzünders zu verhindern, sind im Stand der Technik verschiedene thermische Überlastschutzvorrichtungen bekannt.

So ist aus der DE-AS 24 24 385 ein Überhitzungsschutz für einen elektrischen Zigarrenanzünder bekanntgeworden, bei welchem ein an einem Zündstecker befestigtes Glühelement während des Aufheizvorgangs von Bimetallfedern festgehalten und nach dem Aufheizen bei einer definierten Temperatur freigegeben wird. Zusätzlich ist am Boden einer Steckdose des Zigarrenanzünders eine unter der Vorspannung eines Federblechs stehende Isolierschei be aus thermoplastischem Werkstoff vorgesehen, welche zwischen den elektrischen Anschlußkontakten für das aufheizbare Glühelement angeordnet ist. Im Falle einer thermischen Überlastung erweicht der thermoplastische Werkstoff der Isolierscheibe. Daraufhin wird er durch das Federblech deformiert und zur Seite gedrückt, so daß ein Kurzschluß zwischen den Anschlußkontakten entsteht. Aufgrund des ausgelösten Kurzschlusses bzw. des hierdurch fließenden hohen Kurzschlußstromes spricht eine Sicherung im Bordnetz an, welche für eine rasche Abschaltung des die Überhitzung erzeugenden elektrischen Stroms sorgt.

Nachteilig ist bei der aus der DE-AS 24 24 385 bekannten Überlastschutzvorrichtung, daß beim Überschreiten einer gerade noch zu tolerierenden Temperatur nicht unmittelbar eine Unterbrechung des Heizstroms bewirkt wird, sondern daß zunächst ein Kurzschluß ausgelöst wird, zu dessen schadensfreier Beherrschung das schnelle Ansprechen einer Fahrzeugsicherung erforderlich ist. Bis zum Ansprechen der Fahrzeugsicherung können jedoch kurzzeitigströme von über 100 Ampere fließen. Auch ist zu beachten, daß eine handelsübliche Kraftfahrzeugsicherung bis zum Ansprechen den 1,5-fachen Nennstrom über einen Zeitraum von einer Stunde fließen lassen kann. Weiter ist nachteilig, daß der im Stand der Technik bekannte Überhitzungsschutz bereits nach einmaligem Ansprechen unbrauchbar geworden ist, da sich die thermische Isolierscheibe irreversibel plastisch verformt hat. Außerdem ist eine Absicherung gegen unzulässig hohe Stromentnahme herkömmlicherweise nicht vorhanden. Hierbei ist zu beachten, daß die Steckdose des Zigarrenanzünders auch als Schnittstelle zwischen dem Bordnetz und irgendwelchen Zubehör-Stromverbrauchern (z.B. Lampen, Pumpen, Elektrowerkzeuge) dienen kann, welche über einen als Adapter dienenden separaten Zubehörstecker anschließbar sind. Hierbei kann ein unzulässig hoher Entnahmestrom fließen, welcher zu einer entsprechenden Überhitzung führen kann. Tritt bei dem im Stand der Technik bekannten Zigarrenanzünder eine Überhitzung des Glühelements ein, z.B. weil die Bimetallfedern das Glühelement nicht rechtzeitig freigeben, weil diese verbogen oder mit dem Glühspiralennapf verschweißt sein können, oder weil der Betätigigungsknopf des Zigarrenanzündersteckers aufgrund äußerer mechanischer Einflüsse (z.B. weil ein vor dem Zigarrenanzünder stehender Gegenstand die Freigabe des Zündsteckers blockiert) am Heraus springen gehindert ist, dann erweicht die Isolierscheibe durch die auftretende hohe Temperatur, wobei durch den in Folge auftretenden Kurzschluß die zugehörige Sicherung anspricht und den Heizstrom abschaltet.

In jedem Fall kann die thermische Überlastung zu einer irreversiblen Beschädigung des Zigarrenanzünders sowie zu einer Überhitzungsgefahr in seiner Umgebung führen. Ist anstatt eines Zigarrenanzündersteckers ein Zubehörstecker mit der Steckdose verbunden, welcher zur Versorgung eines Zubehör-Stromverbrauchers einen unzulässig hohen Entnahmestrom über die Steckverbindung fließen läßt, so kann eine Überhitzung der Steckdose und ihrer

Umgebung und/oder Teilen des Bordkabelnetzes entstehen. Hier versucht die Erfindung Abhilfe zu schaffen.

Es ist demnach Aufgabe der Erfindung, ausgehend vom vorbekannten Stand der Technik und unter Vermeidung obengenannter Nachteile, eine thermische Überlastschutzvorrichtung für einen elektrischen Zigarrenanzünder zu schaffen, welche vollautomatisch arbeitend sicherstellt, daß der tolerierte Temperatur- bzw. Leistungsbereich nicht überschritten wird, und welche ein vielfaches zerstörungsfreies Ansprechen ermöglicht.

Diese Aufgabe wird durch die in den nebengeordneten Ansprüchen 1 bis 5 näher gekennzeichneten Merkmale gelöst. Vorteilhafte Weiterbildungen und Ausführungen der Erfindung sind in den Unteransprüchen näher gekennzeichnet.

Dadurch, daß im Heizstromkreis, vorzugsweise zwischen dem Steckdosengehäuse und dem Minuskontaktteil der Heizstromversorgung für das Glühelement des Zündsteckers ein Schutzelement mit temperaturabhängiger PTC-Widerstandscharakteristik (PTC = Positive-Temperature-Coefficient) elektrisch in Reihe liegt und mit dem Steckdosengehäuse thermisch gekoppelt ist, ist dafür gesorgt, daß im Falle des Zigarrenanzünders eine Überhitzung und im Falle eines aus der Steckdose versorgten anderen Stromverbrauchers ein unzulässig hoher Strom zu einem Anwachsen des elektrischen Widerstandes des Schutzelementes führt, was seinerseits eine Verringerung des fließenden Stroms I bewirkt. Damit wird der Ursache der Erwärmung bzw. Überlastung unmittelbar entgegengewirkt. Erfindungsgemäß ist hierdurch eine elektrische und thermische Überlastschutzvorrichtung geschaffen, welche die Überlast beseitigt. Da die Stromstärke wegen der temperaturabhängigen Widerstandserhöhung des Schutzelements stark absinkt, ist dies einer Quasiabschaltung des seriengeschalteten Glühelements bzw. Verbrauchers gleichzusetzen. Wenn die Ursache der Überlast beseitigt ist, d.h., wenn der Stromkreis unterbrochen wird, kehrt das Schutzelement selbständig wieder in seinen Ausgangszustand zurück; d.h., die Steckdose ist wieder von neuem betriebsbereit. Erfindungsgemäß ist somit der Zigarrenanzünder selbst, sowie die an seine Steckdose angeschlossenen externen Stromverbraucher sowie seine unmittelbare Umgebung gegen unzulässig hohe Erwärmung sicher geschützt. Die Schutzvorrichtung kann bei Verzicht auf direkte thermische Kopplung auch räumlich getrennt von der Steckdose angeordnet werden.

Erfindungsgemäß kann das Schutzelement auch eine spannungsabhängige Widerstandscharakteristik aufweisen, wobei zum Aktivieren des Schutzelements der an einem ohmschen Widerstand auftretende Spannungsabfall, insbesondere ein im Bordnetz auftretender Spannungsabfall herangezogen wird.

Zur Lösung der gestellten Aufgabe ist es auch möglich, daß das Schutzelement eine spannungsabhängige Widerstandscharakteristik aufweist und daß das Schutzelement mit dem temperaturabhängigen Spannungssignal eines geeignet zu plazierenden Thermosensors beaufschlagt wird, wodurch ebenfalls eine strombegrenzende Wirkung im Heizstromkreis erreicht wird.

Nach einer weiteren Ausführungsform kann das Schutzelement ferner eine stromabhängige Widerstandscharakteristik aufweisen, wobei bei Ansteigen des Stroms aufgrund der hierbei auftretenden Eigenerwärmung sich der Widerstand in Abhängigkeit von der Stromstärke ebenfalls erhöht, was wiederum zu einer Stromverminderung führt.

Gemäß einer bevorzugten Ausführungsform kann als thermische und elektrische Überlastschutzvorrichtung auch eine beliebige Kombination von Schutzelementen mit temperaturabhängiger, spannungsabhängiger und stromstärkeabhängiger Widerstandscharakteristik Anwendung finden. Vorteilhafterweise kann vorgesehen werden, daß das Ansprechen des Schutzelements optisch oder akustisch angezeigt wird und/oder in einem Fahrzeugcomputer zur Fehlererkennung gespeichert wird.

Die Erfindung soll nachstehend anhand der schematischen Zeichnung näher beschrieben und erläutert werden.

Es zeigen:

Fig. 1 eine Seitenschnittansicht eines Steckdosengehäuses 2 eines mit einem Schutzelement 1 versehenen elektrischen Zigarrenanzünders,

Fig. 2 ein schematisches Ersatzschaltbild des mit dem Schutzelement 1 nach einer ersten Ausführungsform versehenen elektrischen Zigarrenanzünders.

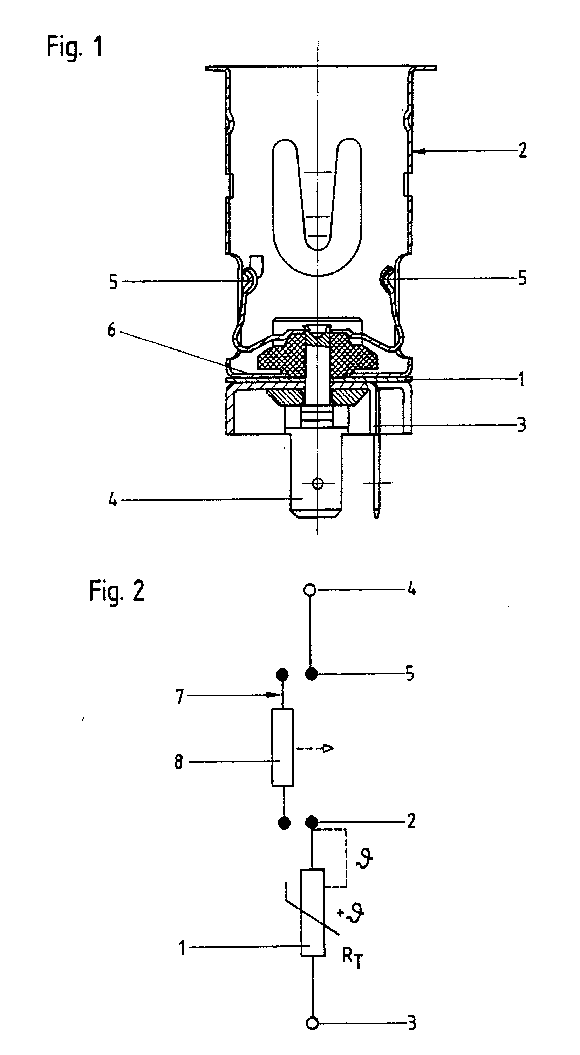

Fig. 1 zeigt eine mediane Seitenschnittansicht durch ein Steckdosengehäuse 2 eines elektrischen Zigarrenanzünders. Der im becherförmigen Steckdosengehäuse 2 zu versenkende Zündstecker (nicht abgebildet) kontaktiert mit einem Wandungsteil das Steckdosengehäuse 2 und mit einem an ihm angeordneten mittels Widerstandsheizung angeordneten Glühelement (nicht abgebildet) einen Bimetallfederkontakt 5, welcher am Bodenwandungsteil 6 mit einem Pluskontaktteil (4) in leitender Verbindung steht. Zwischen dem Bodenwandungsteil 6 und einem Minuskontaktteil 3 ist ein Schutzelement 1 elektrisch und thermisch leitend angeordnet. Das Schutzelement 1 ist gemäß einem Ausführungsbeispiel als temperaturabhängiges Bauelementausgebildet. Hierbei handelt es sich um einem Widerstand mit einem positiven Temperaturkoeffizienten des Widerstandwertes. Die Erwärmung des Schutzelements 1 kann sowohl extern über das thermisch angekoppelte Bodenwandungsteil 6 als auch intern durch Stromfluß erfolgen. Bei wachsender Temperatur erhöht sich der Innenwiderstand des Schutzelements 1, so daß die Stromstärke zurückgeht und damit der Ursache der Erwärmung entgegengewirkt wird. Das erfindungsgemäß angeordnete Schutzelement 1 geht selbständig in den Ausgangszustand zurück, wenn die Ursache der Überlast beseitigt, d.h. der Stromkreis unterbrochen wird.

Fig. 2 zeigt ein schematisches Ersatzschaltbild der erfindungsgemäßen elektrischen und thermischen Überlastschutzvorrichtung gemäß einer in Figur 1 beschriebenen Ausführungsform. Im Betriebsfall, d.h., wenn ein Zündstecker 7 nebst ohmschen Widerstand 8 eines Glühelements des Zündsteckers 7 den Bimetallfederkontakt 5 mit dem Steckdosengehäuse 2 verbindet, fließt der Heizstrom vom Pluskontaktteil 4 über den ohmschen Widerstand 8 und das Schutzelement 1 mit temperaturabhängiger Widerstandscharakteristik zum Minuskontaktteil 3. Das Schutzelement 1 ist an das Steckdosengehäuse 2 thermisch angekoppelt.

Die erfindungsgemäß vorgesehene thermische Überlastschutzvorrichtung funktioniert wie folgt. Im Betriebsfall, d. h., wenn ein Zündstecker in das Steckdosengehäuse 2 versenkt wird, kontaktiert die Wandung des Zünd steckers die Wandung des Steckdosengehäuses 2. Andererseits kontaktiert das Glühelement des Zündsteckers den Bimetallfederkontakt 5. Dementsprechend fließt über den Pluskontaktteil 4, den Bimetallkontakt 5, die Gehäusewandung des Zündsteckers, das Steckdosengehäuse 2 und das Bodenwandungsteil 6 und das Schutzelement 1 zum Minuskontaktteil 3 ein das Glühelement des Zündsteckers aufheizender Heizstrom. Da der Heizstrom auch durch das Schutzelement 1 fließt, ist hiermit eine Eigenerwärmung verbunden. Beim Erreichen einer bestimmten durch interne Wärmeentwicklung oder externe Wärmeeinwirkung erzeugten Grenztemperatur fließt nur noch ein unbedeutender Leckstrom, der eine unzulässig hohe Erwärmung jedenfalls nicht mehr zuläßt. Das Schutzelement geht selbständig in den Ausgangszustand zurück, sobald die Ursache der Überlast beseitigt, d.h., der Stromkreis, z.B. durch Herausziehen des Zündsteckers unterbrochen wird. Ein pendelndes "Ein-" und "Ausschalten", wie es bei einer allein einen Bimetallkontakt aufweisenden Abschalteinrichtung stattfinden würde, findet hierbei nicht mehr statt.

## Ansprüche

1. Elektrischer Zigarrenanzünder, insbesondere für Kraftfahrzeuge, mit einem an einen Minuskontaktteil angeschlossenen Steckdosengehäuse, welches einen an einem Pluskontaktteil angeschlossenen Bimetallfederkontakt aufweist, und einem mit einem elektrisch aufheizbaren Glühelement versehenen Zündstecker, wobei während des Aufheizvorgangs einerseits ein Zündsteckerwandungsteil mit dem Steckdosengehäuse und andererseits das Glühelement mit dem Bimetallfederkontakt in elektrisch leitender Verbindung steht, so daß ein mit Hilfe des Pluskontaktteils, des Bimetallfederkontakts, des Zündsteckerwandungsteils, des Steckdosengehäuses und des Minuskontaktteils gebildeter Heizstromkreis geschlossen ist, sowie mit einem thermischen Überlastschutz, dadurch gekennzeichnet, daß als thermische Überlastschutzvorrichtung ein Schutzelement (1) mit temperaturabhängiger PTC-Widerstandscharakteristik mit dem Steckdosengehäuse (2) und dem Minuskontaktteil (3) elektrisch in Reihe liegt und mit dem Steckdosengehäuse (2) thermisch gekoppelt ist.

2. Elektrischer Zigarrenanzünder nach dem Oberbegriff des Anspruchs 1, dadurch gekennzeichnet, daß als thermische Überlastschutzvorrichtung ein Schutzelement (1) mit spannungsabhängiger Widerstandscharakteristik mit dem Steckdosengehäuse (2) elektrisch in Reihe liegt, wobei zum Aktivieren des Schutzelements (1) der an einem ohmschen Widerstand, insbesondere des Bordnetzes, auftretende Spannungsabfall herangezogen wird.

3. Elektrischer Zigarrenanzünder nach dem Oberbegriff des Anspruchs 1, dadurch gekennzeichnet, daß als thermische Überlastschutzvorrichtung ein Schutzelement (1) mit spannungsabhängiger Widerstandscharakteristik mit dem Steckdosengehäuse (2) elektrisch in Reihe liegt, wobei das Schutzelement (1) mit dem temperaturabhängigen Spannungssignal eines Thermosensors beaufschlagt wird.

4. Elektrischer Zigarrenanzünder nach dem Oberbegriff des Anspruchs 1, dadurch gekennzeichnet, daß als thermische Überlastschutzvorrichtung ein Schutzelement (1) mit stromabhängiger Widerstandscharakteristik mit dem Steckdosengehäuse (2) elektrisch in Reihe liegt.

5. Elektrischer Zigarrenanzünder nach dem Oberbegriff des Anspruchs 1, dadurch gekennzeichnet, daß als thermische Überlastschutzvorrichtung eine beliebige Kombination der in den Ansprüchen 1 bis 4 gekennzeichneten Schutzelemente (1) Verwendung finden.

6. Elektrischer Zigarrenanzünder nach einem der vorhergehenden Ansprüche, dadurch gekennzeichnete daß das Ansprechen des Schutzelements 1 über ein entsprechendes Signal optisch und/oder akustisch angezeigt wird und/oder in einem Fahrzeugcomputer zwecks Fehlererkennung gespeichert wird.

Fig. 1

Fig. 2

$\vartheta$

$+\vartheta$

$R_T$

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 237 995 (KABUSHIKI KAISHA TOKAI)<br>* Ansprüche 1, 2; Figuren *<br>– – – | 1 | F 23 Q 7/00 |
| A | US-A-2 210 025 (COHEN)<br>* Seite 3, linke Spalte, Zeile 37 - Seite 3, rechte Spalte, Zeile 2; Figur 5 *<br>– – – – – | 1 | |
| | | | **RECHERCHIERTE SACHGEBIETE (Int. Cl.5)**<br><br>F 23 Q<br>B 60 N |

**Der vorliegende Recherchenbericht wurde für alle Patentansprüche erstellt**

| Recherchenort | Abschlußdatum der Recherche | Prüfer |
|---|---|---|
| Den Haag | 20 Dezember 90 | VANHEUSDEN J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument